# EUROPÄISCHE PATENTSCHRIFT

(11) **EP 2 668 232 B1**
(45) Veröffentlichungstag und Bekanntmachung des Hinweises auf die Patenterteilung: **13.12.2017**
(21) Anmeldenummer: 11802043.7
(22) Anmeldetag: 15.12.2011
(51) Int. Cl.: C08L 33/00, C08J 5/18, C08F 285/00, C08F 220/10, C08F 265/06

(54) **IMPACT-MODIFIZIERTES REAKTIONSHARZ**
IMPACT-MODIFIED REACTION RESIN
RÉSINE DE RÉACTION ANTICHOC

(30) Priorität: 28.01.2011 DE 102011003317
(43) Veröffentlichungstag der Anmeldung: 04.12.2013
(73) Patentinhaber: Evonik Röhm GmbH, 64293 Darmstadt (DE)
(72) Erfinder: HILF, Stefan, 63517 Rodenbach (DE); POPPE, Dirk, 60599 Frankfurt am Main (DE); KLEIN, Alexander, 55435 Gau-Algesheim (DE); HEEB, Heike, 63526 Erlensee (DE); STEFFAN, Armin, 63674 Altenstadt (DE)
(86) Internationale Anmeldenummer: PCT/EP2011/072846
(87) Internationale Veröffentlichungsnummer: WO 2012/100879

(56) Entgegenhaltungen:
- DE-A1- 10 233 685

## Beschreibung

### Gebiet der Erfindung

Die vorliegende Erfindung umfasst eine neuartige Formulierung zur Markierung oder Beschichtung von Bodenflächen bzw. Fahrbahnen, wie beispielsweise Straßen, die gegenüber dem Stand der Technik über verbesserte mechanische Eigenschaften und eine verbesserte Temperaturbeständigkeit bei der Härtung verfügen. Gleichzeitig betrifft die Erfindung verbesserte Reaktionsharze für weitere Anwendungen neben Straßenmarkierungen. Die vorliegende Erfindung betrifft insbesondere Reaktionsharze, die Kern-Schale-Partikel enthalten.

An moderne Fahrbahnmarkierungen wird eine Reihe von Ansprüchen gestellt. Zum einen wird von solchen Systemen erwartet, dass sie eine einfache Auftragbarkeit auf der Straßenoberfläche und gleichzeitig hohe Lagerstabilität, sowie eine lange Lebensdauer der Markierung mit sich bringen. Auch von Bedeutung sind eine schnelle Verarbeitbarkeit und insbesondere eine Verarbeitbarkeit in einem möglichst breiten Temperaturfenster. Viele reaktive Straßenmarkierungs- und Bodenbeschichtungssysteme nach Stand der Technik härten bei Temperaturen oberhalb von 40 °C zu unkontrolliert aus. Es kann zu Blasenbildungen, klebrigen Oberflächen und unvollständig gehärteten Bereichen kommen. Dies führt wiederum zu verminderten Haftungen und verkürzten Lebensdauern. Bei Temperaturen unterhalb von 10 °C ist eine Aushärtung dagegen sehr verlangsamt und frisch markierte Straßenabschnitte müssen für längere Zeit abgesperrt werden oder künstlich eine Temperierung der Markierungen vorgenommen werden. Bei Temperaturen unterhalb des Gefrierpunktes sind Markierungsarbeiten mit Systemen des Standes der Technik oft ganz ausgeschlossen.

### Stand der Technik

Die Verbesserung der Temperaturabhängigkeit beim Aushärten von Reaktionsharzen, sowie deren mechanischen Eigenschaften sind schon längere Zeit Ziel der Entwicklung. Als Fahrbahnmarkierungsmaterialien werden zurzeit Systeme wie Lösungsmittel basierte Farben, Wasserfarben, thermoplastische Farben, Farben auf Basis von Reaktionsharzen sowie vorgefertigte Klebebänder eingesetzt. Letztere haben den Nachteil, dass sie aufwendig herzustellen und zu applizieren sind. Auch gibt es in Hinblick auf eine anzustrebende Langlebigkeit der Markierung nur eingeschränkte Freiheitsgrade bezüglich der Ausgestaltung der Markierung, z.B. mit Glasperlen.

Thermoplastische Überzüge, die im geschmolzenen Zustand auf der Fahrbahnoberfläche aufgebracht werden, können an sich auch auf eine hohe Aushärtungsgeschwindigkeit optimiert werden. Ihre Verwendung hat den großen Nachteil eines zusätzlichen Verfahrensschrittes, indem das Produkt erst, z.B. bei 200 °C zum Schmelzen gebracht werden muss, bevor es appliziert werden kann. Dies ist nicht nur wegen der hohen Temperatur potentiell gefährlich, sondern thermoplastische Systeme weisen an sich eine erhöhte Abriebsneigung und eine verminderte thermische Belastbarkeit auf. Thermoplastische Systeme sind oft deutlich kurzlebiger als Systeme, die z.B. auf Reaktionsharzen basieren und unter Vernetzung reagieren.

Zur Flexibilisierung von Reaktionsharzsystemen nach Stand der Technik werden typischerweise (meth)acrylische Comonomere oder Weichmacher zu der Monomer-Polymer Mischung zugegeben die die Glastemperatur der ausgehärteten Masse absenken, beispielsweise n-Butylacrylat, 2-Ethylhexylacrylat oder andere langkettige bzw. verzweigte radikalisch härtbare Monomere deren Homopolymer einen Glasübergang von unter 0°C aufweist. Diese Monomere erzeugen jedoch ein weiteres bekanntes Problem, da durch Zugabe solcher Monomere zur Flexibilisierung deren typischerweise unvollständige Aushärtung in der Anwendung zu einer Erhöhung des VOC-Anteils und der Langzeitgeruchsbelästigung durch langsames Verdampfen der Monomere führt und die Aushärtung zusätzlich verlangsamt.

### Aufgabe

Aufgabe der vorliegenden Erfindung ist die Bereitstellung eines neuen Reaktionsharzes, das gegenüber dem Stand der Technik unabhängig von der Anwendung über eine längere Lebensdauer verfügt.

Aufgabe der vorliegenden Erfindung ist insbesondere die Bereitstellung eines neuen Reaktionsharzes, z.B. für Formulierungen zur Markierung von Fahrbahnoberflächen, das gegenüber dem Stand der Technik über verbesserte mechanische Eigenschaften insbesondere in Hinblick auf die Kombination aus Härte und Flexibilität verfügt. Insbesondere betreffen die zu verbessernden mechanischen Eigenschaften eine Verminderung der Rissfortpflanzung, eine Flexibilisierung, eine höhere mechanische Belastbarkeit und eine Verbesserung der Verträglichkeit punktueller Belastung.

Aufgabe der vorliegenden Erfindung ist darüber hinaus die Bereitstellung einer neuen Formulierung zur Markierung von Fahrbahnoberflächen, die gegenüber dem Stand der Technik über eine längere Lebensdauer verfügt.

Darüber hinaus soll die Formulierung zur Markierung von Fahrbahnoberflächen in einem Bereich zwischen 5 °C und 50 °C unabhängig von der Umgebungstemperatur ohne Blasenbildung applizierbar sein.

Eine besondere Aufgabe besteht darin, ein Reaktionsharz zur Verfügung zu stellen, das gegenüber dem Stand der Technik langlebigere Fahrbahnmarkierungen mit guter Untergrundhaftung, guten Retroreflektionseigenschaften, guter Tages- und Nachtsichtbarkeit, einem hohen, stabilen Weißgrad und einer guten Griffigkeit, auch bei nasser Fahrbahn, ermöglicht.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch eine neuartige Verwendung eines Reaktionsharz auf (Meth)acrylatbasis, das mindestens einen Vernetzer, Monomere, Polymere und mindestens ein Schlagzähmodifizierungsmittel enthält, zur Herstellung von langlebigen Straßenmarkierungen oder Fußbodenbelägen.

Bevorzugt werden die Aufgaben gelöst durch ein neuartiges Reaktionsharz, das mindestens einen Vernetzer, Monomere, Polymere und mindestens ein Kern-Schal-Polymerisat enthält.

Dabei weist das neuartige verwendete Reaktionsharz mindestens folgende Inhaltsstoffe auf:
0,5 bis 30 Gew% Vernetzer, bevorzugt Dimethacrylate,
20 bis 85 Gew% Monomere, bevorzugt (Meth)acrylate und/oder mit
   (Meth)acrylaten copolymerisierbare Komponenten,
0 bis 20 Gew% Urethan(meth)acrylate,
3 bis 40 Gew% Präpolymere, bevorzugt Poly(meth)acrylate,
0 bis 5 Gew% Beschleuniger, bevorzugt Amine,
1 bis 25 Gew% Kern-Schale-Polymerisat, bevorzugt enthaltend
   Poly(meth)acrylate und gegebenenfalls weitere Hilfsstoffe.

Bei den weiteren Hilfsstoffen kann es sich z.B. um Stabilisatoren, Inhibitoren, Regler oder Wachse handeln. Die Formulierungen Poly(meth)acrylate umfasst sowohl Polymethacrylate wie auch Polyacrylate sowie Copolymere oder Mischungen aus beiden. Die Formulierung (Meth)acrylate umfasst entsprechend Methacrylate, Acrylate oder Mischungen aus beiden.

Darüber hinaus sind auch Kaltplastiken und Kaltspritzplastiken, das erfindungsgemäße Reaktionsharz enthaltend, teil der vorliegenden Erfindung. Diese Kaltplastiken weisen folgende Komponenten auf:
5 bis 60 Gew% des zuvor beschriebenen Reaktionsharzes
1 bis 5 Gew% einer Mischung, enthaltend ein oder mehrere
   Initiatoren, bevorzugt Peroxide,
7 bis 15 Gew% eines anorganischen Pigments, bevorzugt Titandioxid und
50 bis 60 Gew% mineralische Füllstoffe.

Die Komponenten der Kaltplastik werden bei der Verwendung zur Markierung von Fahrbahnoberflächen vor oder während dem Auftragen auf der Fahrbahnoberfläche gemischt. Bei anderen Verwendungen erfolgt das Mischen der Komponenten entsprechend kurz vor oder während des Gießens, Beschichtens oder Füllens, je nach Verwendung.

Bevorzugt handelt es sich bei dem Peroxid um Dilauroylperoxid und/oder Dibenzoylperoxid. Bei dem Amin handelt es sich bevorzugt um ein tertiäres, aromatisch substituiertes Amin.

In einer alternativen Ausführungsform ist das Peroxid Bestandteil des Reaktionsharzes und der Beschleuniger nicht Bestandteil des Reaktionsharzes, sondern einer getrennten Komponente der Kaltplastik.

Die Kern-Schale Partikel müssen gut dispergiert in der Monomer-Polymer Mischung des Reaktionsharzes vorliegen um keine Trübungen oder Klumpenbildung zu verursachen. Dies kann durch entsprechendes Rühren oder mittels einer anderen bekannten Dispergiertechnik einfach sichergestellt werden.

Durch die Zugabe von Kern-Schale Partikeln, insbesondere bekannt als Impact Modifier für z.B. PMMA-Formmassen oder PVC, konnten überraschend wesentliche Eigenschaften von acrylischen Reaktionsharzen entscheidend verbessert werden.

Hierbei sind vor allem eine hohe Flexibilität von dennoch harten Strukturen sowie eine verbesserte Temperaturbeständigkeit bei der Härtung, unter Vermeidung von Blasenbildung, zu erwähnen. Die Kern-Schale Partikel werden in einem Anteil von 1 bis 25 Gew% in die Reaktionsharze, bevorzugt 1 bis 15 Gew%, besonders bevorzugt 2 bis 12 Gew% eingebracht.

Diese Eigenschaften führen zu einer höheren mechanischen Belastbarkeit und darüber hinaus zu einer Verminderung der Rissfortpflanzung und einer höheren Verträglichkeit punktueller Belastung.

Insgesamt weisen die erfindungsgemäßen Reaktionsharze, die daraus hergestellten Kaltplastiken und die daraus wiederum z.B. hergestellten Fahrbahnmarkierungen eine längere Lebensdauer als Systeme des Standes der Technik auf. Darüber hinaus weisen sie eine verbesserte Haftung durch Vermeidung des Abreissens vom Untergrund auf. da eventuell auftretende Schrumpfspannungen durch das Material ausgeglichen bzw. überbrückt werden können. Weiterhin sind eine gegenüber dem Stand der Technik verbesserte Haftung zum Untergrund sowie ein deutlich verbessertes Schrumpfverhalten festzustellen.

Überraschend wurde gefunden, dass diese Eigenschaften in dem für die Anwendung relevanten Temperaturfenster zwischen -30 °C und 70 °C, bevorzugt zwischen -10 °C und 50 °C temperaturunabhängig erhalten werden.

Darüber hinaus wurde auch überraschend gefunden, dass die mechanischen Eigenschaften der erfindungsgemäßen Fahrbahnmarkierung in einem typischen Bereich zwischen 200 µm und 7000 m, unabhängig von der Auftragsdicke, sind. Die Auftragsdicke der erfindungsgemäßen Kaltplastik bzw. Kaltspritzplastik liegt bevorzugt zwischen 400 µm und 1000 µm und besonders bevorzugt zwischen 600 µm und 800 µm. Dünnere und dickere Schichten sind ja nach Anwendung möglich.

Überraschend wurde darüber hinaus gefunden, dass eine Fahrbahnmarkierung, erhältlich durch Applikation einer erfindungsgemäßen Kaltplastik, enthaltend ein erfindungsgemäßes Reaktionsharz, Kern-Schale Partikel aufweisend, so formuliert werden kann, dass sie schnell aushärtet und bereits nach 10 min, je nach Formulierung bereits nach 5 min eine derartige Festigkeit, Untergrundhaftung, Formstabilität und Abriebsfestigkeit aufweist, dass sie wieder befahren werden kann. Das heißt bei Anwendung im Straßenverkehr, dass bei Verwendung des erfindungsgemäßen Systems ein aufwendiges und langwieriges Absperren des zu markierenden Fahrbahnabschnittes nicht mehr nötig ist.

Unter dem Begriff Überrollbarkeit bzw. dem synonym verwendeten Begriff Wiederbefahrbarkeit wird eine Belastung der Fahrbahnmarkierung, z.B. in Form des Überrollens durch Fahrzeuge, verstanden. Die Zeitspanne bis zur Erreichung einer Überrollbarkeit ist die Zeitspanne zwischen dem Auftragen der Fahrbahnmarkierung bis zu dem Zeitpunkt, an dem keine Veränderungen in Form eines Abriebs, eines Haftungsverlusts zur Fahrbahnoberfläche bzw. zu den eingebetteten Glaskugeln oder einer Verformung der Markierung mehr festgestellt werden kann. Die Messung der Form- und Haftungsstabilität erfolgt gemäß DIN EN 1542 99 in Einklang mit DAfStb-RiLi 01.

### Das Schlagzähmodifizierungsmittel

Dem Fachmann sind eine große Zahl Schlagzähmodifizierungsmittel, wie z.B. Elastomerteilchen, bekannt. Diese finden vor allem in an sich spröden Kunststoffen wie PVC oder auch PMMA Verwendung, um die Schlagzähfähigkeit zu erhöhen. Bevorzugt handelt es sich bei den Schlagzähmodifizierungsmitteln um Kern-Schale-Partikel.

### Die Kern-Schale Partikel

Die Kern-Schale Partikel, bzw. gleichbedeutend Impact Modifier oder Schlagzähmodifizierungsmittel, können in verschiedenen Ausführungsformen, die zu dem gleichen, erfindungsgemäßen Reaktionsharz führen, zugesetzt werden.

In einer ersten Ausführungsform werden die Kern-Schale Partikel direkt zugesetzt. Diese Ausführungsform hat den Vorteil, dass man bei der Wahl des gleichfalls zuzugebenden Polymers einen größeren Freiheitsgrad bezüglich der Zugabeform, z.B. in Form eines feinkörnigen eines Suspensionspolymerisats, hat.

Die reinen Kern-Schale Partikel können als Koagulat, als Sprühgut oder als gefriergetrocknetes Gut direkt eingesetzt bzw. als durch Extrusion eines Emulsionspolymerisates (Abquetschextrusion) gewonnenes Granulat eingesetzt werden, wie es in DE19927769 und den hierin zitierten Schriften beschrieben ist.

Bei dem Kern des Kern-Schale Partikels handelt es sich zumeist um einen technischen Thermoplasten oder Elastomeren, der durch Bepfropfung oder Emulsionspolymerisation mit einem Saat-Latex bzw. eine sequentielle Emulsionspolymerisation gewonnen werden kann. Als Kernmaterial kommen im Allgemeinen amorphe Copolymerisate mit einer Glasübergangstemperatur kleiner 0°C, beispielsweise Acrylat-, ASA-, Dien,- Organosiloxan-EPDM-, SBS-, SEBS-, ABS-, und MBS-Kautschuke, sowie Kerne auf Ethylenbasis, wie beispielsweise EnBA- und EMA-Copolymerisate, in Betracht. Die Kerne können ggf. mit reaktiven Gruppen, wie z. B. Epoxy- oder Anhydridgruppen funktionalisiert sein. Diese und andere zur Schlagzähmodifizierung eingesetzten Materialien sind z. B. in DE 10 2005 034 999 und den dort zitierten Schriften beschrieben.

In weiteren Ausführungsformen werden die Kern-Schale Partikel in Form einer schlagzähmodifizierten Formmasse, die Kern-Schale-Partikel und zumindest einen Teil des Polymers enthaltend, zugegeben. Diese Ausführungsform hat den Vorteil, dass die Dispergierung des Kern-Schale Partikels im Reaktionsharz schneller und einfacher durchzuführen ist. Solche Kern-Schale Partikel enthaltenden Suspensionspolymerisate werden beispielsweise als zk50 von der Evonik Röhm GmbH vertrieben. Weitere Ausführungsformen wären Kern-Schale Partikel enthaltende Masterbatches, enthaltend weitere Polymerisate. ein solcher Masterbatch kann beispielsweise durch Extrusion gewonnen werden. Auch verwendbar wäre ein spezieller Reaktionsharz-Masterbatch.

Schlagzähmodifizierungsmittel z.B. für Polymethacrylat-Kunststoffe sind hinlänglich bekannt. Erfindungsgemäß verwendete Schlagzähmodifizierungsmittel sind insbesondere Polymerisatteilchen, die einen zwei- oder einen dreischichtigen Kern-Schale-Aufbau aufweisen können und durch Emulsionspolymerisation erhalten werden. Solche Schlagzähmodifizierungsmittel sind z.B. in EP-A 0 113 924, EP-A 0 522 351, EP-A 0 465 049 und EP-A 0 683 028 beschrieben. Geeignete Teilchengrößen dieser Emulsionspolymerisate liegen im Sinne dieser Erfindung bevorzugt in einem Bereich von 25 nm bis 1000 nm, bevorzugt von 50 nm bis 700 nm und besonders bevorzugt von 80 nm bis 500 nm.

Die Kern-Schale Partikel können dabei zwei-, drei- oder mehrschalig aufgebaut sein. bevorzugt enthalten die Kern-Schale Partikel mindestens eine Hart- und eine Zähphase. Die Hartphase zeichnet sich dabei durch eine hohe Glasübergangstemperatur von mindestens 70 °C aus. Die Zähphase weist gleichzeitig eine Glasübergangstemperatur *T*_{g} unter -10 °C auf. Bei einem zweischaligen Kern-Schale Partikel können sowohl die Hart- als auch die Zähphase den Kern bilden. In der Regel wird der Kern durch die Zähphase gebildet.

Ein dreischichtiger bzw. dreiphasiger Aufbau mit einem Kern und zwei Schalen kann wie folgt beschaffen sein. Bevorzugt sind der Kern und die äußerste Schale Hartphasen, während die mittlere Schale eine Zähphase darstellt. Durch die äußerste Hartphase wird die Verträglichkeit und gute Anbindung an eine Matrix verbessert. Der Aufbau eines solchen Kern-Schale Partikels kann z.B. wie folgt aussehen: Der harte Kern kann z.B im wesentlichen aus Methylmethacrylat, geringen Anteilen von Comonomeren, wie z.B. Ethylacrylat und einem Vernetzeranteil, z.B. Allylmethacrylat, bestehen. Die mittlere, weiche Schale (Zähphase) kann z.B. aus Butylacrylat und gegebenenfalls Styrol aufgebaut sein, während die äußerste, harte Schale im wesentlichen meist dem Matrixpolymerisat entspricht. Aber auch andere Ausführungsformen wie weich-hart-weich, weich-hart-hart oder hart-weich-weich sind denkbar. Die Zusammensetzung der äußersten Schale wird bevorzugt der Umgebungsmatrix angepasst und zumindest bei einer der beiden inneren Schalen sollte es sich zur Verbesserung der Schlagzähigkeit um eine Zähphase handeln.

Bevorzugt sind entweder der Kern und/oder mindestens eine Schale des Kern-Schale Partikels vernetzt. Diese Vernetzung stabilisiert den Partikel und verbessert die Schlagzäheigenschaften merklich.

In der Ausführungsform eines zweiphasigen, schlagzähmodifizierten Polymerisats kann beispielsweise ein, im Prinzip aus EP 0 528 196 A1 bekanntes, System verwendet werden:
a) 10 bis 95 Gew% einer zusammenhängenden Hartphase, aufgebaut aus 80 bis 100 Gew% Methylmethacrylat und 0 bis 20 Gew% eines oder mehrerer weiterer ethylenisch ungesättigter, radikalisch polymerisierbarer Monomeren, und
b) 5 bis 90 Gew% einer in der Hartphase verteilten Zähphase, aufgebaut aus 50 bis 99,5 Gew% eines C₁-C₁₀-Alkylacrylats, 0,5 bis 5 Gew% eines vernetzenden Monomers mit zwei oder mehreren ethylenisch ungesättigten, radikalisch polymerisierbaren Resten, und gegebenenfalls weiteren ethylenisch ungesättigten, radikalisch polymerisierbaren Monomeren, wobei wenigstens 15 Gew% der Hartphase a) mit der Zähphase b) kovalent verknüpft sind.

Ein zweiphasiges Schlagzähmodifizierungsmittel kann durch eine zweistufige Emulsionspolymerisation in Wasser erzeugt werden, wie z.B. in DE 38 42 796 beschrieben. In der ersten Stufe wird beispielsweise die Zähphase erzeugt, die zu mindestens 50 Gew%, vorzugsweise zu mehr als 80 Gew%, aus niederen Alkylacrylaten aufgebaut ist, woraus sich eine Glasübergangstemperatur T_{g} dieser Phase von unter -10 °C ergibt. Als vernetzende Monomere werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropan-triacrylat und -trimethacrylat sowie Pentaerythrit-tetraacrylat und -tetramethacrylat genannt. Weitere Beispiele sind hierzu in US 4,513,118 angegeben.

Die genannten ethylenisch ungesättigten, radikalisch polymerisierbaren Monomeren können beispielsweise Acryl- bzw. Methacrylsäure sowie deren Alkylester mit 1 bis 20 Kohlenstoffatomen sein, wobei der Alkylrest linear, verzweigt oder cyclisch sein kann. Desweiteren können weitere radikalisch polymerisierbare aliphatische Comonomere, die mit den Alkylacrylaten copolymerisierbar sind, eingesetzt werden. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften des Endprodukts führen können.

In der alternativen Zugabeform einer schlagzähmodifizierten Formmasse, bevorzugt einer schlagzähmodifizierten Polyester- oder PMMA-Formmasse, besonders bevorzugt einer PMMA-Formmasse besteht diese aus 1 bis 80 Gew%, bevorzugt aus 20 bis 70 Gew% eines Matrix-Polymers, bevorzugt eines Poly(meth)acrylats und aus 99 bis 20 Gew%, bevorzugt 80 bis 30 Gew% Kern-Schale Partikeln, wie oben beschrieben.

Diese schlagzähmodifizierten Formmassen können in einem Extruder, wie in DE19927769 beschrieben ist, durch Zugabe der Kern-Schale Partikel, welche in koagulierter bzw. sprühgetrockneter Form oder als Dispersion in Wasser eingesetzt werden und gegebenenfalls des Matrix-Polymers zu schlagzähmodifizierten Formmassen in der Schmelze vermischt werden. Hierbei kann bei der Koagulation einer eingesetzten Dispersion eingesetztes Wasser aus dem Extruder abgeführt und damit eine trockene Schmelze erhalten werden. Das ausgetragene Material wird in der Regel zunächst zu einem Granulat geschnitten. Dieses kann bei Bedarf weiter vermalen werden.

Das Matrixpolymer kann beispielsweise aus 60 bis 100 Gew% aus radikalisch polymerisierten Methylmethacrylat-Einheiten und gegebenenfalls zu 0 bis 40 Gew%, aus weiteren radikalisch polymerisierbaren Comonomeren, z.B. C₁- bis C₄-Alkyl(meth)acrylaten, insbesondere Methyl-, Ethyl-, Propyl- oder Butyl(meth)acrylat zusammengesetzt sein. Vorzugsweise liegt das Gewichtsmittel des Molekulargewichts M_{w} der Matrix im Bereich von 2 000 g/mol bis 200 000 g/mol, bevorzugt von 25 000 g/mol bis 150 000 g/mol, besonders bevorzugt von 50 000 g/mol bis 150 000 g/mol (Bestimmung von M_{w} mittels Gelpermeationschromatographie unter Bezug auf Polymethylmethacrylat als Standard).

### Komponenten der Kaltplastik bzw. des Reaktionsharzes

Zusätzlich kann die Kaltplastik oder Kaltspritzplastik weitere Hilfsstoffe wie Netz- und/oder Dispergiermittel, einen griffigen (rutschfesten) Füllstoff und Antiabsetzmittel enthalten. Auch können die Glaskugeln, die zur Verbesserung der Reflexion zugesetzt werden, bereits in dieser Komponente der Kaltplastik enthalten sein. Alternativ können diese auch Bestandteil der zweiten Komponente sein und bevorzugt, je nach Auftragungsmechanismus der Fahrbahnmarkierung, werden die Glaskugeln als dritte Komponente aufgetragen. Bei diesem Vorgehen, zum Beispiel angewendet mit modernen Markierungsfahrzeugen mit einer zweiten Düse, werden die Kugeln direkt nach dem Auftrag der ersten beiden Komponenten auf diese aufgespritzt. Vorteil bei diesem Vorgehen ist, dass nur der Teil der Glaskugeln, der in die Markierungsmatrix eingebettet ist, mit den Bestandteilen der anderen beiden Komponenten benetzt ist und man erhält optimale Reflexionseigenschaften. Ganz besonders bei Anwendung dieser Technologie ist jedoch eine besonders gute Einbettung der Glasperlen und eine entsprechend gute Haftung der Markierungsmatrix, bzw. der Fahrbahnmarkierungsformulierung an der Oberfläche der Glaskugeln wichtig. Überraschend wurde gefunden, dass das erfindungsgemäße Reaktionsharz, bzw. die Kaltspritzplastik, dieses Reaktionsharz enthaltend, diese geforderten Eigenschaften mindestens auf dem Niveau des Standes der Technik erfüllt. Genaue geregelt sind die geforderten Eigenschaften an eine Straßenmarkierung in DIN EN 1436.

Um die geforderten Eigenschaften weiter zu verbessern, können die Glaskugeln mit Haftvermittlern zusammen aufgetragen oder mit diesen vorher behandelt werden. Somit sind die Retrorefelektionseigenschaften und die Tages- bzw. Nachtsichtbarkeit der erfindungsgemäßen Kaltplastik mit dem Stand der Technik zumindest vergleichbar. Entsprechendes gilt für die Langlebigkeit, insbesondere der Einbettung der Glasperlen.

Die zweite Komponente der Kaltplastik oder Kaltspritzplastik enthält den Initiator. Als Polymerisationsinitiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide wie Dilauroylperoxid, Dibenzoylperoxid, tert.-Butylperoctoat, Di(tert-butyl)peroxid (DTBP), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Für Reaktionsharze zur Anwendung zum Beispiel für Fahrbahnmarkierungen sind besonders bevorzugt Dilauroylperoxid oder Dibenzoylperoxid. In der Regel ist das Peroxid in der zweiten Komponente mit einem Verdünnungsmittel, beispielsweise mit einem Phthalat wie Dibutylphthalat, einem Öl oder einem anderen Weichmacher versetzt. Die erfindungsgemäße Kaltplastik als Summe der ersten und der zweiten, sowie optional der dritten Komponente enthält zwischen 0,1 Gew% und 7 Gew%, bevorzugt zwischen 0,5 Gew% und 6 Gew% und ganz besonders bevorzugt zwischen 1 Gew% und 5 Gew% des Initiators bzw. der Mischung aus dem Initiator und dem Verdünnungsmittel.

Die bevorzugte Ausführungsform eines Redox-Starter-Systems für Reaktionsharze ist die Kombination aus Peroxiden und Beschleunigern, insbesondere Aminen. Als besagte Amine seien zum Beispiel tertiäre aromatisch substituierte Amine, wie insbesondere N,N-Dimethyl-p-toluidin, N,N-bis-(2-Hydroxyethyl)-p-toluidin oder N,N-bis-(2-Hydroxypropyl)-p-toluidin genannt. Das erfindungsgemäße Reaktionsharz kann bis zu 5 Gew% und ganz besonders bevorzugt bis zu 3 Gew% eines Beschleunigers enthalten.

In einer Alternativen Ausführungsform eines alternativen 2K- bzw. 3-K-Systems, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes. Bei der optionalen dritten Komponente handelt es sich wieder um die Glaskugeln und eventuell benötigte Haftvermittler.

Ein entscheidender Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Poly(urethan)(meth)acrylate Tetraethylenglycol-di(meth)acrylat, Triethylenglycoldi(meth)acrylat oder Trimethylolpropantri(meth)acrylat. Der Vernetzeranteil ist gegenüber dem Stand der Technik deutlich erhöht und liegt zwischen 13 Gew% und 35 Gew%, bevorzugt zwischen minimal 20 Gew% und maximal 30 Gew%. Überraschend wurde gefunden, dass dieser relativ hohe Anteil an Vernetzer nicht nur eine hohe Anfangshärtung mit sich bringt, sondern auch in Kombination mit den anderen Komponenten eine schnelle Überrollbarkeit der Fahrbahnmarkierung, das erfindungsgemäße Harz enthaltend, ermöglicht.

Unter den optional enthaltenen Urethan(meth)acrylaten versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen (Meth)acrylaten ist EBECRYL 210-5129 der Fa. UCB Chemicals. Urethan(meth)acrylate erhöhen in einem Reaktionsharz, ohne größere Temperaturabhängigkeit, die Flexibilität, die Reißfestigkeit und die Reißdehnung. Dies hat, wie überraschend gefunden wurde, auf die Fahrbahnmarkierung in zweierlei Hinsicht einen Einfluss: Die Temperaturstabilität der Markierung nimmt zu und, besonders überraschend, können die Nachteile eines, bedingt durch den höheren Vernetzergehalt, höheren Vernetzungsgrades bezüglich Versprödung und Haftung gegenüber der Fahrbahnoberfläche ausgeglichen werden oder sogar gegenüber Kaltplastiken gemäß dem Stand der Technik verbessert werden. Dazu ist eine für Fahrbahnmarkierungen relativ hohe Konzentration der Urethan(meth)acrylate in dem Reaktionsharz nötig. Das erfindungsgemäße Reaktionsharz enthält zwischen 5 Gew% und 30 Gew%, bevorzugt zwischen 10 Gew% und 20 Gew% der beschriebenen Urethan(meth)acrylate.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen.

Als Bestandteile von Monomergemischen eignen sich auch zusätzliche Monomere mit einer weiteren funktionellen Gruppe, wie a,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole. Im Einzelnen wird das Poly(meth)acrylat nach Anteil und Zusammensetzung zweckmäßigerweise im Hinblick auf die gewünschte technische Funktion gewählt werden.

Der Monomeranteil des Reaktionsharzes liegt dabei zwischen 20 Gew% und 85 Gew%, bevorzugt zwischen 30 Gew% und 40 Gew%.

In sogenannten MO-PO-Systemen liegen neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Der Präpolymeranteil des Reaktionsharzes liegt dabei zwischen 10 Gew% und 30 Gew%, bevorzugt zwischen 15 Gew% und 25 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf.
Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnende Polymerisation gewonnen und setzen sich aus den für diese Anwendungen bekannten Bausteinen zusammen.

Als Hilfs- und Zusatzstoffe können zusätzlich Regler, Weichmacher, Paraffine, Stabilisatoren, Inhibitoren, Wachse und/oder Öle eingesetzt werden.
Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan eingesetzt.
Als Weichmacher werden vorzugsweise Ester, Polyole, Öle, niedermolekulare Polyether oder Phthalate eingesetzt.

Zusätzlich können den Formulierungen zur Fahrbahnmarkierungen Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.
Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Zudem können der Formulierung ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Fahrbahnmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite sowie Korund eingesetzt. Als Grobfüllstoffe werden Quarze, Cristobalite, Korunde und Aluminiumsilikate eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Fahrbahnmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Diese Formulierungsfreiheiten zeigen, dass das erfindungsgemäße Reaktionsharz bzw. die erfindungsgemäße Kaltplastik/Kaltspritzplastik, das Reaktionsharz enthaltend, genauso formulierbar und additivierbar ist, wie eine etablierte Kaltplastik/Kaltspritzplastik des Standes der Technik. Somit sind auch die Abriebfestigkeit, die Langlebigkeit, der Weißgrad, die Pigmentierung und die Griffigkeit mindestens so gut wie bei Systemen des Standes der Technik. Überraschend wurde jedoch gefunden, dass die Langlebigkeit und die Haftung begründet durch die erläuterten, besonderen mechanischen Eigenschaften und die zusätzlichen haftvermittelnden Eigenschaften der Urethan(meth)acrylate sogar besser sind als im Stand der Technik beschrieben.
Zumindest die Vergleichbarkeit mit dem Stand der Technik gilt entsprechend auch bezüglich der Lagerstabilität des Reaktionsharzes.
Auch kann das System bezüglich des zu beschichtenden Untergrunds, mittels Wahl geeigneter Monomere, Präpolymere und/oder Haftvermittler, optimiert werden. Die erfindungsgemäßen Systeme sind entsprechend variabel optimierbar für die Markierung von Asphalt-, Beton- oder Natursteinoberflächen.

### Verwendung der Reaktionsharze bzw. Kaltplastiken/ Kaltspritzplastiken

Auch bezüglich der Applikationstechnologie sind die erfindungsgemäßen Systeme flexibel einsetzbar. Die erfindungsgemäßen Reaktionsharze, bzw. Kaltplastiken können z.B. sowohl im Spritz-, im Gieß- als auch im Extrusionsverfahren bzw. manuell mittels einer Kelle, einer Rolle oder einem Rakel aufgetragen werden.

Die einzelnen Komponenten der Kaltplastik wie z.B. das erfindungsgemäße Reaktionsharz können vor, nach oder während der Weiterverarbeitung, wie z.B. dem Auftragen auf einer Fahrbahnoberfläche, gemischt werden. Etabliert ist ein Einmischen vor der Weiterverarbeitung, wobei darauf zu achten ist, dass nach dem Einmischen der Härterkomponente eine nur limitierte offene Zeit, z.B. von 2 oder 40 min, zum Applizieren verbleibt.

Ein Mischen während des Verarbeitens ist zum Beispiel in modernen Markierungsmaschinen, die über eine der Auftragsdüse vorgeschaltete Mischkammer verfügen, möglich. Ein Einmischen des Härters nach dem Auftragen kann z.B. durch ein nachfolgendes Auftragen mit zwei oder mehr Düsen erfolgen oder durch auftragen von Glaskugeln, welche mit Härter beschichtet sind. Alternativ kann eine Grundierung enthaltend die Härterkomponente vorgesprüht werden bevor die Kaltplastik oder Kaltspritzplastik aufgetragen wird.

Bevorzugt werden die erfindungsgemäßen Reaktionsharze bzw. die daraus hergestellten Kaltplastiken zur Herstellung von langlebigen Fahrbahnmarkierungen verwendet.

Insbesondere werden die Reaktionsharze bzw. Kaltplastiken in einem Verfahren angewandt, bei dem vor, während oder direkt nach der Aufbringung der Kaltplastik auf einer Fahrbahnoberfläche Glaskugeln zugegeben werden.

Alternativ können die erfindungsgemäßen Reaktionsharze und/oder Kaltplastiken auch in anderen technischen Gebieten Anwendung finden. Beispiele dafür sind Fußbodenbeläge, bevorzugt für industrielle Anwendungen, zur Herstellung von Gussteilen, zur Abdichtung von Brücken oder deren Fugen, insbesondere als Dampfsperrmembran, zur Brückenbeschichtung allgemein, als Dampfsperrmembran auf Dächern, zur Herstellung von Platten, z.B. zur Weiterverwendung als Arbeitsplatte, als Kanalharz, zur Rissverfüllung z.B. in Gebäuden, oder zur Verwendung im Bereich der Orthopädie.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die Herstellung der Probenkörper und die Messung der Zugfestigkeit, des E-Moduls, der Streckdehnung, der Streckspannung und der Bruchdehnung erfolgen gemäß ISO527.

Die verwendeten Kern-Schale-Schale Partikel bestehen aus 23 Gew% Kern, 47 Gew% Schale 1 und 30 Gew% Schale 2. Der Kern weist dabei folgende Zusammensetzung auf:
95,5 Gew% Methylmethacrylat, 4 Gew% Ethylacrylat, 0,5 Gew% Allylmethacrylat
Schale 1 weist folgende Zusammensetzung auf:
81 Gew% n-Butylacrylat, 17,5 Gew% Styrol, 1,5 Gew% Allylmethacrylat)
Schale 2 weist folgende Zusammensetzung auf:
96,5 Gew% Methylmethacrylat, 4 Gew% Ethylacrylat,
0,5 Gew% n-Dodecylmertcaptan

### Beispiel 1:

Zu 63 Teilen Methylmethacrylat und 5 Teilen Triethylenglycoldimethacrylat werden 0,05 Teile Topanol-O, 15 Teile Degacryl M339 (Fa. Evonik Röhm GmbH), 10 Teile Kern-Schale-Schale Partikel und 0,5 Teile Paraffin innig vermengt und unter starkem Rühren auf 63°C erhitzt bis alle Polymerbestandteile gelöst bzw. dispergiert sind. Zur Härtung werden 1 Teil Benzoylperoxid (50 Gew%ige Formulierung in Dioctylphthalat) und 1,9 Teile N,N-Diisopropoxytoluidin zugegeben und für eine Minute bei Raumtemperatur (21°C) eingerührt. Zum Aushärten wurde die Masse auf ein Metallblech gegossen und Probenkörper nach DIN 50125 hergestellt.
Topfzeit: 11 min; Härtezeit: 22 min; Auslaufzeit (8 mm): 74 sec

### Beispiel 2:

Zu 63 Teilen Methylmethacrylat und 5 Teilen Butyldiglycoldimethacrylat werden 0,05 Teile Topanol-O, 13 Teile Degacryl M339, 9 Teile Kern-Schale-Schale Partikel und 0,5 Teile Paraffin innig vermengt und unter starkem Rühren auf 63°C erhitzt bis alle Polymerbestandteile gelöst bzw. dispergiert sind. Zur Härtung werden 1 Teil Benzoylperoxid (50 Gew%ige Formulierung in Dioctylphthalat) und 2 Teile N,N-Diisopropoxytoluidin zugegeben und für eine Minute bei Raumtemperatur (21°C) eingerührt.

Zum Aushärten wurde die Masse auf ein Metallblech gegossen und Probenkörper nach DIN 50125 hergestellt.
Topfzeit: 14 min; Härtezeit: 30 min; Auslaufzeit (4 mm): 244 sec

### Beispiel 3:

Zu 63 Teilen Methylmethacrylat und 5 Teilen Triethylenglycoldimethacrylat werden 0,05 Teile Topanol-O, 25 Teile Degalan LP 66/02 und 0,5 Teile Paraffin innig vermengt und unter starkem Rühren auf 63°C erhitzt bis alle Polymerbestandteile gelöst sind. Zur Härtung werden 1 Teil Benzoylperoxid (50 Gew%ige Formulierung in Dioctylphthalat) und 1,9 Teile N,N-Diisopropoxytoluidin zugegeben und für eine Minute bei Raumtemperatur (21°C) eingerührt. Zum Aushärten wurde die Masse auf ein Metallblech gegossen und Probenkörper nach DIN 50125 hergestellt.
Topfzeit: 13 min; Härtezeit: 29 min; Auslaufzeit (4 mm): 78 sec

### Beispiel 4:

Zu 63 Teilen Methylmethacrylat und 5 Teilen Butyldiglycoldimethacrylat werden 0,05 Teile Topanol-O, 22 Teile Degalan LP 64/12 und 0,5 Teile Paraffin innig vermengt und unter starkem Rühren auf 63°C erhitzt bis alle Polymerbestandteile gelöst bzw. dispergiert sind. Zur Härtung werden 1 Teil Benzoylperoxid (50 Gew%ige Formulierung in Dioctylphthalat) und 2 Teile N,N-Diisopropoxytoluidin zugegeben und für eine Minute bei Raumtemperatur (21°C) eingerührt.

Zum Aushärten wurde die Masse auf ein Metallblech gegossen und Probenkörper nach DIN 50125 hergestellt.
Topfzeit: 16 min; Härtezeit: 33 min; Auslaufzeit (4 mm): 64 sec

**Tabelle 1 mit Messergebnissen:**

| Messung | Beispiel 1 | Beispiel 2 | Beispiel 3 | Beispiel 4 |
|---|---|---|---|---|
| Zugfestigkeit | 43,7 MPa | 50,6 MPa | 41,8 MPa | 52,7 MPa |
| E-Modul | 2181 MPa | 2488 MPa | 2731 MPa | 2630 MPa |
| Streckdehnung | 3,6% | 3,9% | 0% | 0% |
| Streckspannung | 43,8 MPa | 50,8 MPa | 0 MPa | 0 MPa |
| Bruchdehnung | 5,1% | 6,7% | 1,8% | 3,1% |

### Beispiel 5:

Zu 75 Teilen Methylmethacrylat und 5 Teilen Butyldiglycoldimethacrylat werden 0,05 Teile Topanol-O, 15 Teile zk50 und 0,5 Teile Paraffin innig vermengt und unter starkem Rühren auf 63°C erhitzt bis alle Polymerbestandteile gelöst bzw. dispergiert sind. Zur Härtung werden 1 Teil Benzoylperoxid (50 Gew%ige Formulierung in Dioctylphthalat) und 2 Teile N,N-Diisopropoxytoluidin zugegeben und für eine Minute bei Raumtemperatur (21°C) eingerührt.

Zum Aushärten wurde die Masse auf ein Metallblech gegossen.
Topfzeit: 11 min; Härtezeit: 22 min; Auslaufzeit (8 mm): 95 sec

### Beispiel 6:

Zu 162 Teilen Methylmethacrylat und 7 Teilen Butyldiglycoldimethacrylat werden 0,1 Teile Topanol-O, 8 Teile Degacryl M339, 8 Teile Kern-Schale-Schale Partikel und 1,5 Teile Paraffin innig vermengt und unter starkem Rühren auf 63°C erhitzt bis alle Polymerbestandteile gelöst bzw. dispergiert sind. Zur Härtung werden 1,5 Teile Benzoylperoxid (50 Gew%ige Formulierung in Dioctylphthalat) und 2,5 Teile N,N-Diisopropoxytoluidin zugegeben und für eine Minute bei Raumtemperatur (21°C) eingerührt. Zum Aushärten wurde die Masse auf ein Metallblech gegossen und Probenkörper nach DIN 50125 hergestellt.
Topfzeit: 12 min; Härtezeit: 40 min; Auslaufzeit (3 mm): 44 sec

### Beispiel 7:

Zu 162 Teilen Methylmethacrylat und 7 Teilen Butyldiglycoldimethacrylat werden 0,1 Teile Topanol-O, 26 Teile Degalan LP 66/02 und 1,5 Teile Paraffin innig vermengt und unter starkem Rühren auf 63°C erhitzt bis alle Polymerbestandteile gelöst sind. Zur Härtung werden 1,5 Teile Benzoylperoxid (50 Gew%ige Formulierung in Dioctylphthalat) und 2,5 Teile N,N-Diisopropoxytoluidin zugegeben und für eine Minute bei Raumtemperatur (21°C) eingerührt. Zum Aushärten wurde die Masse auf ein Metallblech gegossen und Probenkörper nach DIN 50125 hergestellt.
Topfzeit: 13 min; Härtezeit: 29 min; Auslaufzeit (3 mm): 31 sec

| Messung | Beispiel 6 | Beispiel 7 |
|---|---|---|
| Zugfestigkeit | 39,8 MPa | 58,5 MPa |
| E-Modul | 2265 MPa | 2471 MPa |
| Bruchdehnung | 3,2% | 5,5% |

## Patentansprüche

1. Verwendung eines Reaktionsharzes auf (Meth)acrylatbasis zur Herstellung von langlebigen Straßenmarkierungen oder Fußbodenbelägen, **dadurch gekennzeichnet,**
**dass** das Reaktionsharz mindestens einen Vernetzer, Monomere, Polymere und mindestens ein Schlagzähmodifizierungsmittel enthält, und dass das Reaktionsharz folgende Inhaltsstoffe aufweist:
0,5 Gew% bis 30 Gew% Vernetzer,
20 Gew% bis 85 Gew% Monomere,
0 Gew% bis 20 Gew% Urethan(meth)acrylate,
3 Gew% bis 40 Gew% Präpolymere,
0 Gew% bis 5 Gew% Beschleuniger,
1 Gew% bis 25 Gew% Kern-Schale Partikel und
gegebenenfalls weitere Hilfsstoffe.

2. Verwendung eines Reaktionsharzes gemäß Anspruch 1, **dadurch gekennzeichnet,**
**dass** das Reaktionsharz halogenfrei ist, und dass das Reaktionsharz folgende Inhaltsstoffe aufweist:
20 Gew% bis 30 Gew% Dimethacrylate,
30 Gew% bis 40 Gew% (Meth)acrylate und/oder mit (Meth)acrylaten
copolymerisierbare Komponenten,
0 Gew% bis 20 Gew% Urethan(meth)acrylate,
15 Gew% bis 25 Gew% Poly(meth)acrylate,
0 Gew% bis 5 Gew% Amine,
1 Gew% bis 15 Gew% Kern-Schale Partikel enthaltend Polymethacrylate und
gegebenenfalls weitere Hilfsstoffe.

3. Verwendung eines Reaktionsharzes gemäß mindestens einem der Ansprüche 1 oder 2, **dadurch gekennzeichnet, dass** es sich bei dem Kern-Schale Partikel um Poly(meth)acrylat enthaltende Partikel mit einem Kern und mindestens einer Schale handelt, und dass der Kern und/oder mindestens eine Schale eine Glasübergangstemperatur von über 70 °C und der Kern und/oder eine Schalen, die keine Glasübergangstemperatur oberhalb von 70 °C aufweisen, eine Glasübergangstemperatur unterhalb von - 10 °C aufweisen.

4. Verwendung eines Reaktionsharzes gemäß mindestens einem der Ansprüche 1 bis 3, **dadurch gekennzeichnet, dass** der Kern und/oder eine oder mehrere Schalen des Kern-Schale Partikels vernetzt sind.

5. Verwendung eines Reaktionsharzes gemäß mindestens einem der Ansprüche 1 bis 4, **dadurch gekennzeichnet, dass** der Kern-Schale Partikel einen Durchmesser zwischen 25 nm und 1000 nm aufweist.

6. Verwendung eines Reaktionsharzes gemäß mindestens einem der Ansprüche 1 bis 5, **dadurch gekennzeichnet, dass** der Kern-Schale Partikel zusammen mit dem Präpolymer in Form einer Formmasse dem Reaktionsharz zugegeben wird, und dass diese Formmasse zu 20 bis 80 Gew% aus einem Präpolymer und zu 20 bis 80 Gew% aus dem Kern-Schale Partikel besteht.

7. Verwendung eines Reaktionsharzes gemäß Anspruch 6, **dadurch gekennzeichnet, dass** die Formmasse zu 1 bis 80 Gew% aus einem Präpolymer und zu 20 bis 99 Gew% aus dem Kern-Schale Partikel besteht.

8. Kaltplastik, **dadurch gekennzeichnet,**
**dass** die Kaltplastik folgende Komponenten aufweist:
5 Gew% bis 60 Gew% eines Reaktionsharzes, welches 0,5 Gew% bis 30 Gew% Vernetzer, 20 Gew% bis 85 Gew% Monomere, 3 Gew% bis 40 Gew% Gew% bis 5 Gew% Beschleuniger, 1 Gew% bis 25 Gew% Kern-Schale Partikel und gegebenenfalls weitere Hilfsstoffe enthält,
1 Gew% bis 5 Gew% einer Mischung, enthaltend ein oder mehrere Initiatoren, bevorzugt Peroxide,
7 Gew% bis 15 Gew% eines anorganischen Pigments, bevorzugt Titandioxid und
50 Gew% bis 60 Gew% mineralische Füllstoffe.

9. Kaltplastik gemäß Anspruch 8, **dadurch gekennzeichnet, dass** es sich bei dem Peroxid um Dilauroylperoxid und/oder Dibenzoylperoxid und bei dem Amin um ein tertiäres, aromatisch substituiertes Amin handelt.

10. Kaltplastik gemäß einem der Ansprüche 8 oder 9, **dadurch gekennzeichnet,**
**dass** das Peroxid Bestandteil des Reaktionsharzes gemäß einem der Ansprüche 1 bis 4 ist, und
**dass** der Beschleuniger nicht Bestandteil des Reaktionsharzes, sondern eine getrennte Komponente der Kaltplastik darstellt.

11. Verwendung einer Kaltplastik gemäß einem der Ansprüche 8 bis 10 zur Herstellung von langlebigen Fahrbahnmarkierungen.

12. Verwendung einer Kaltplastik gemäß einem der Ansprüche 8 bis 10 zur Herstellung von langlebigen Fahrbahnmarkierungen, **dadurch gekennzeichnet, dass** vor, während oder direkt nach der Aufbringung der Kaltplastik auf der Fahrbahnoberfläche Glaskugeln zugegeben werden.

## Claims

1. Use of a (meth)acrylate-based reactive resin for producing long-life road markings or floor coverings, **characterized in that**
the reactive resin comprises at least one crosslinking agent, monomers, polymers, and at least one impact modifier, and **in that** the reactive resin has the following ingredients:
from 0.5% by weight to 30% by weight of crosslinking agent,
from 20% by weight to 85% by weight of monomers,
from 0% by weight to 20% by weight of urethane (meth)acrylates,
from 3% by weight to 40% by weight of prepolymers,
from 0% by weight to 5% by weight of accelerator,
from 1% by weight to 25% by weight of core-shell particles, and
optionally other auxiliaries.

2. Use of a reactive resin according to Claim 1, **characterized in that**
the reactive resin is halogen-free, and that the reactive resin has the following ingredients:
from 20% by weight to 30% by weight of dimethacrylates,
from 30% by weight to 40% by weight of (meth) acrylates and/or components copolymerizable with (meth)acrylates,
from 0% by weight to 20% by weight of urethane (meth)acrylates,
from 15% by weight to 25% by weight of poly(meth)acrylates,
from 0% by weight to 5% by weight of amines,
from 1% by weight to 15% by weight of core-shell particles comprising
polymethacrylates, and
optionally other auxiliaries.

3. Use of a reactive resin according to at least one of Claims 1 and 2, **characterized in that** the core-shell particle involves particles comprising poly (meth) acrylate, with a core and with at least one shell, and that the core and/or at least one shell has/have a glass transition temperature above 70°C, and the core and/or one shell which does/do not have a glass transition temperature above 70°C has/have a glass transition temperature below -10°C.

4. Use of a reactive resin according to at least one of Claims 1 to 3, **characterized in that** the core and/or one or more shells of the core-shell particle has/have been crosslinked.

5. Use of a reactive resin according to at least one of Claims 1 to 4, **characterized in that** the diameter of the core-shell particle is from 25 nm to 1000 nm.

6. Use of a reactive resin according to at least one of Claims 1 to 5, **characterized in that** the core-shell particle is added together with the prepolymer in the form of a molding composition to the reactive resin, and that said molding composition is composed of from 20 to 80% by weight of a prepolymer and from 20 to 80% by weight of the core-shell particle.

7. Use of a reactive resin according to Claim 6, **characterized in that** the molding composition is composed of from 1 to 80% by weight of a prepolymer and from 20 to 99% by weight of the core-shell particle.

8. Cold plastic, **characterized in that** the cold plastic has the following components:
from 5% by weight to 60% by weight of a reactive resin which comprises from 0.5% by weight to 30% by weight of crosslinking agent, from 20% by weight to 85% by weight of monomers, from 3% by weight to 40% by weight of prepolymers, from 0% by weight to 5% by weight of accelerator, from 1% by weight to 25% by weight of core-shell particles, and optionally other auxiliaries,
from 1% by weight to 5% by weight of a mixture comprising one or more initiators, preferably peroxides,
from 7% by weight to 15% by weight of an inorganic pigment, preferably titanium dioxide, and
from 50% by weight to 60% by weight of mineral fillers.

9. Cold plastic according to Claim 8, **characterized in that**
the peroxide involves dilauroyl peroxide and/or dibenzoyl peroxide, and the amine involves a tertiary, aromatically substituted amine.

10. Cold plastic according to Claim 8 or 9, **characterized in that**
the peroxide is a constituent of the reactive resin according to any of Claims 1 to 4, and
that the accelerator is not a constituent of the reactive resin, but instead is a separate component of the cold plastic.

11. Use of a cold plastic according to any of Claims 8 to 10 for producing long-life trafficway markings.

12. Use of a cold plastic according to any of Claims 8 to 10 for producing long-life trafficway markings, **characterized in that** glass beads are added to the trafficway surface before, during, or directly after the application of the cold plastic.

## Revendications

1. Utilisation d'une résine réactive à base de (méth)acrylate pour la fabrication de marques routières durables ou de revêtements de sol, **caractérisée en ce que** la résine réactive contient au moins un agent de réticulation, des monomères, des polymères et au moins un modificateur de la résistance aux impacts, et **en ce que** la résine réactive comprend les constituants suivants :
0,5 % en poids à 30 % en poids d'agent de réticulation, 20 % en poids à 85 % en poids de monomères,
0 % en poids à 20 % en poids de (méth)acrylates d'uréthane,
3 % en poids à 40 % en poids de prépolymères,
0 % en poids à 5 % en poids d'accélérateurs,
1 % en poids à 25 % en poids de particules noyau-enveloppe et
éventuellement d'autres adjuvants.

2. Utilisation d'une résine réactive selon la revendication 1, **caractérisée en ce que** la résine réactive est sans halogène, et **en ce que** la résine réactive comprend les constituants suivants :
20 % en poids à 30 % en poids de diméthacrylates,
30 % en poids à 40 % en poids de (méth)acrylates et/ou de composants copolymérisables avec les (méth)acrylates,
0 % en poids à 20 % en poids de (méth)acrylates d'uréthane,
15 % en poids à 25 % en poids de poly(méth)acrylates,
0 % en poids à 5 % en poids d'amines,
1 % en poids à 15 % en poids de particules noyau-enveloppe contenant des polyméthacrylates et éventuellement d'autres adjuvants.

3. Utilisation d'une résine réactive selon au moins l'une quelconque des revendications 1 ou 2, **caractérisée en ce que** les particules noyau-enveloppe sont des particules contenant du poly(méth)acrylate comprenant un noyau et au moins une enveloppe, et **en ce que** le noyau et/ou au moins une enveloppe présentent une température de transition vitreuse supérieure à 70 °C et le noyau et/ou une enveloppe qui ne présentent pas une température de transition vitreuse supérieure à 70 °C présentent une température de transition vitreuse inférieure à -10 °C.

4. Utilisation d'une résine réactive selon au moins l'une quelconque des revendications 1 à 3, **caractérisée en ce que** le noyau et/ou une ou plusieurs enveloppes des particules noyau-enveloppe sont réticulés.

5. Utilisation d'une résine réactive selon au moins l'une quelconque des revendications 1 à 4, **caractérisée en ce que** les particules noyau-enveloppe présentent un diamètre compris entre 25 nm et 1 000 nm.

6. Utilisation d'une résine réactive selon au moins l'une quelconque des revendications 1 à 5, **caractérisée en ce que** les particules noyau-enveloppe sont ajoutées à la résine réactive conjointement avec le prépolymère sous la forme d'un matériau de moulage, et **en ce que** ce matériau de moulage est constitué de 20 à 80 % en poids d'un prépolymère et de 20 à 80 % en poids des particules noyau-enveloppe.

7. Utilisation d'une résine réactive selon la revendication 6, **caractérisée en ce que** le matériau de moulage est constitué de 1 à 80 % en poids d'un prépolymère et de 20 à 99 % en poids des particules noyau-enveloppe.

8. Plastique à froid, **caractérisé en ce que** le plastique à froid comprend les composants suivants :
5 % en poids à 60 % en poids d'une résine réactive, qui contient 0,5 % en poids à 30 % en poids d'agent de réticulation, 20 % en poids à 85 % en poids de monomères,
3 % en poids à 40 % en poids de prépolymères, 0 % en poids à 5 % en poids d'accélérateurs, 1 % en poids à 25 % en poids de particules noyau-enveloppe et éventuellement d'autres adjuvants,
1 % en poids à 5 % en poids d'un mélange contenant un ou plusieurs initiateurs, de préférence des peroxydes,
7 % en poids à 15 % en poids d'un pigment inorganique, de préférence le dioxyde de titane, et
50 % en poids à 60 % en poids de charges minérales.

9. Plastique à froid selon la revendication 8, **caractérisé en ce que** le peroxyde est le peroxyde de dilauroyle et/ou le peroxyde de dibenzoyle et l'amine est une amine tertiaire, substituée aromatiquement.

10. Plastique à froid selon l'une quelconque des revendications 8 ou 9, **caractérisé en ce que** le peroxyde fait partie de la résine réactive selon l'une quelconque des revendications 1 à 4, et **en ce que** l'accélérateur ne fait pas partie de la résine réactive, mais est plutôt un composant séparé du plastique à froid.

11. Utilisation d'un plastique à froid selon l'une quelconque des revendications 8 à 10 pour la fabrication de marques routières durables.

12. Utilisation d'un plastique à froid selon l'une quelconque des revendications 8 à 10 pour la fabrication de marques routières durables, **caractérisée en ce que** des billes de verre sont ajoutées avant, pendant ou directement après l'application du plastique à froid sur la surface routière.
